# EUROPEAN PATENT SPECIFICATION

(11) **EP 2 553 357 B1**
(45) Date of publication and mention of the grant of the patent: **20.09.2017**
(21) Application number: 11713917.0
(22) Date of filing: 24.03.2011
(51) Int. Cl.: F25B 17/02, F25B 17/08, F25B 15/02

(54) **SYSTEMS AND METHODS FOR GENERATING POWER AND CHILLING USING UNUTILIZED HEAT**
SYSTEME UND VERFAHREN ZUR STROMERZEUGUNG UND KÜHLUNG ANHAND VON UNGENUTZTER WÄRME
SYSTÈMES ET PROCÉDÉS POUR GÉNÉRER DE L'ÉNERGIE ET DE LA CAPACITÉ DE RÉFRIGÉRATION À PARTIR DE CHALEUR EXCÉDENTAIRE

(30) Priority: 26.03.2010 US 317966 P
(43) Date of publication of application: 06.02.2013
(73) Proprietor: ExxonMobil Research and Engineering Company, Annandale, NJ 08801-0900 (US)
(72) Inventor: MIZAN, Tahmid, I., Bridgewater NJ 08807 (US); MINHAS, Bhupender, S., Bridgewater NJ08807 (US); ZHAO, Sufang, Vienna VA 22182 (US)
(74) Representative: ExxonMobil Chemical Europe Inc.
(86) International application number: PCT/US2011/029712
(87) International publication number: WO 2011/119787

(56) References cited:
- WO-A1-97/16685
- US-A- 4 009 575
- US-A- 5 237 827
- US-A1- 2005 086 971

## Description

### FIELD OF THE INVENTION

The present application relates to systems and methods employing sorbent materials to generate power and chilling using unutilized heat. In particular, the present invention relates to a system and method for the simultaneous generation of power and chilling utilizing waste heat.

### BACKGROUND OF THE INVENTION

Petroleum refining and petrochemical processing operations are energy intensive. It is often necessary to conduct these operations at high temperatures using high temperature heat sources including, but not limited to, steam. After the steam or other hot streams have performed the intended functions, there remains unutilized energy. Refineries and petrochemical facilities typically utilize only 70% of the input energy and a large amount of energy loss occurs at lower temperatures, 450 °F (232.2 °C) or below. There is a strong need to recapture or utilize this energy. Potential uses of this energy include production of electric power, shaft power, or chilling of process streams. However, the cost of equipment to capture this heat can be a disincentive because of the low efficiencies of waste heat capture devices when the source of heat is at or below 450 °F (232.2 °C). Electric power, shaft power, and chilling can be effectively utilized in refineries and petrochemical processes to increase the overall efficiency of the facility.

In an effort to increase efficiency, it is desirable to recover and utilize unutilized heat. One method described in U.S. Patent No. 5,823,003 to Rosser et al. attempts to make use of waste heat and apply such heat to an adsorbent material in order to release an adsorbed gas at a higher pressure, which in turn can be used in a refrigeration cycle that contains an expansion valve. U.S. Patent No. 5,823,003 describes the use of a zeolite-water combination for a sorption refrigeration system.

US 2005/0086971 describes a combined heating/cooling system wherein an absorption tank houses a refrigerant and absorbant mixture. A boiler heats the high pressure mixture and vaporizes the refrigerant, which is directed to a closed-loop thermal exchange system.

US 5237827 describes use of molecular sieve zeolite for the effective utilization of low-grade heat sources such as solar energy, in a system that includes molecular sieve zeolite and a low pressure polar gaseous fluid adapted to be adsorbed by the zeolite which is in a closed container and a circuit which includes a condenser and a gas expansion cooler member. When the container is heated, a gas is given off from the zeolite, cooled in a condenser, and thereafter expanded for cooling purposes. US 4009575 describes a method and an apparatus for implementing the method, for simultaneously generating electrical power and producing refrigeration, utilizing an absorption/regeneration power cycle, and performing useful work with the heat rejected from the cycle.

Current methods to obtain refrigeration from sorbent materials in chemical process applications have their limitations. Often the sorbent materials and gases employed in sorption systems require processing equipment that is expensive to maintain, operate under vacuum, have a refrigeration temperature above water freezing point (32 F, 0°C), unreliable, and requires a large allocation of space. Such limitations often render the recovery of unutilized heat economically unsustainable.

Accordingly, there remains a need to make unutilized heat recovery efforts more cost-effective by providing the opportunity to utilize lower (less than 450 °F (232.2 °C)) grades of unutilized heat and to reduce equipment and space requirements of the process. There also remains a need to provide other uses, besides refrigeration, of the fluid released from unutilized heat-charged sorbent materials.

### SUMMARY OF THE INVENTION

One embodiment of the present application provides a sorption system for generating power and chilling including a first vessel containing a sorbent material in fluid communication with a working fluid and operatively connected to a heat source to yield a feed of working fluid at a supercritical state, a generator in fluid communication with the feed of working fluid at supercritical state to yield power and a feed of working fluid in an at least partially condensed state, and an evaporator in fluid communication with the feed of working fluid in the at least partially condensed state to yield chilling and a feed of uncondensed working fluid. In one embodiment, the heat source is an unutilized heat source.

The present application also provides a process for generating power and chilling including adsorbing a working fluid onto a sorbent material, heating the sorbent material to desorb the working fluid from the sorbent material at a supercritical state, directing the desorbed fluid to drive a generator to generate power and to at least partially condense the desorbed working fluid, and evaporating the at least partially condensed desorbed fluid to yield chilling and a feed of uncondensed working fluid. In one embodiment, the heating is provided by unutilized heat from one of a refining operation and chemical processing operation.

The present application also provides a sorption system for generating both power and chilling that includes an absorber to absorb a working fluid in a liquid sorbent, a pump in fluid communication with the absorber to yield a feed of pressurized liquid sorbent and absorbed working fluid, a heat source to heat the feed of pressurized liquid sorbent and absorbed working fluid to yield a feed of working fluid at a supercritical state, a generator in fluid communication with the feed of working fluid at a supercritical state to yield power and a feed of working fluid in an at least partially condensed state, and an evaporator in fluid communication with the feed of working fluid in the at least partially condensed state to yield chilling and uncondensed working fluid. The heat source may be an unutilized heat source.

The present application also provides a process for generating both power and chilling that includes absorbing a working fluid into a liquid sorbent to yield a liquid sorbent and absorbed working fluid, pressurizing the liquid sorbent and absorbed working fluid to increased pressure, heating the pressurized liquid sorbent and absorbed working fluid to desorb the working fluid from the sorbent material in a supercritical state, directing the desorbed working fluid to drive a generator to generate power and to at least partially condense the desorbed working fluid, and evaporating the at least partially condensed desorbed working fluid to yield chilling and uncondensed working fluid. In one embodiment, the heating is provided by unutilized heat from one of a refining operation and chemical processing operation.

In accordance with another aspect of the present invention, a sorption system for generating power is disclosed. The sorption system includes a first vessel in fluid communication with a working fluid and a liquid sorbent material such that the working fluid is adsorbed in the liquid sorbent in the first vessel to yield a feed of liquid sorbent with an adsorbed working fluid. The working fluid is selected from carbon dioxide, methane, ethane, propane, butane, ammonia and chlorofluorocarbons. The feed of liquid sorbent with an adsorbed working fluid is fed to a heat source. The heat source may be an unutilized heat source which includes a vapor generator. The heat source disengages the liquid sorbent from the adsorbed working fluid to create a feed of working fluid at a supercritical state and a feed of liquid sorbent. A first generator is in fluid communication with the feed of working fluid at supercritical state to yield power and a feed of working fluid in an at least partially condensed state which is in fluid communication with the first vessel. The first generator may be turbo expander. A second generator is in fluid communication with the feed of liquid sorbent to yield power and a feed of liquid sorbent in fluid communication with the first vessel. The second generator may be a twin screw expander.

### BRIEF DESCRIPTION OF THE DRAWINGS

The invention will now be described in conjunction with the accompanying drawings in which:
Figure 1 is a schematic of a sorption system for the generation of chilling.
Figure 2 is a Mollier Diagram annotated to show four points that correspond to four stages of the sorption system described in Figure 1.
Figure 3 is a Mollier Diagram annotated to show alternative process points based on the use of waste heat to achieve a temperature of about 450°F (232.2 °C) and alternative process points based on the use of higher sorbing pressures for use in connection with the generation of chilling.
Figure 4 is a schematic of an adsorption system for the generation of power and/or chilling in accordance with an embodiment of the present application.
Figure 5 is a schematic of an absorption system for the generation of power and/or chilling in accordance with an embodiment of the present application.
Figure 6 is a schematic of an absorption system for the generation of power in accordance with an embodiment of the present application.

### DETAILED DESCRIPTION OF THE INVENTION

The present application will now be described in greater detail in connection with the figures and the following terms.

As used herein, the term "sorbent material" refers to a material that reversibly binds a working fluid. Sorbent materials include, but are not limited to, absorbents and adsorbents.

As used herein, the term "working fluid" refers to a liquid or gas that can reversibly bind to the sorbent material.

As used herein, the term "generator" refers to a turbine, shaft or other mechanism driven by a working fluid (e.g., a working fluid pressurized by an absorption or adsorption system) to generate power or work.

As used herein, the term "vessel" refers to a container suitable for containing a sorbent material and a working fluid under suitable conditions to permit sorption (e.g., absorption or adsorption) and/or desorption.

As used herein, the term "waste heat," "unutilized heat" or "unutilized heat source" refers to the residual or remaining heat source (e.g., steam) following the processing operation after the heat source has been used for its primary purpose in the refining or petrochemical processing operation. Unutilized heat is also referred to as waste heat. The unutilized heat or unutilized heat source refers to a heat source that is no longer of any use in refining and/or petrochemical processing operations and would traditionally be discarded. The unutilized heat can be provided as an unutilized heat stream. For example, but not limitation, unutilized heat can include steam that was employed in a heat exchanger used in petroleum and petrochemical processing, and is of no value to current processes and is being discarded.

As used herein, the term "pump" refers to a physical device that assists in transporting fluids and/or pressurizing fluids to an increased pressure.

As used herein, the term "efficiency" in context of the present invention is defined as the power plus chilling generated over the heat input.

As used herein, the term "twin screw expander" in the context of the present invention is defined as a device driven by high pressure liquid or mixed phase sorbent liquid to generate power or shaft work.

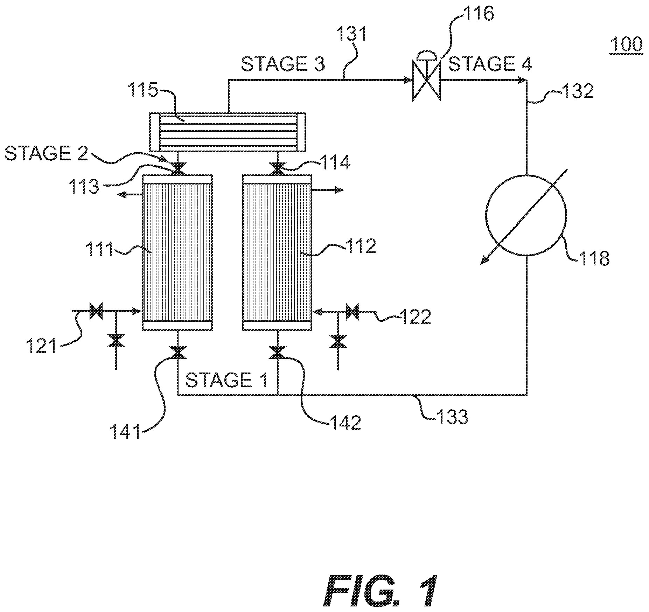

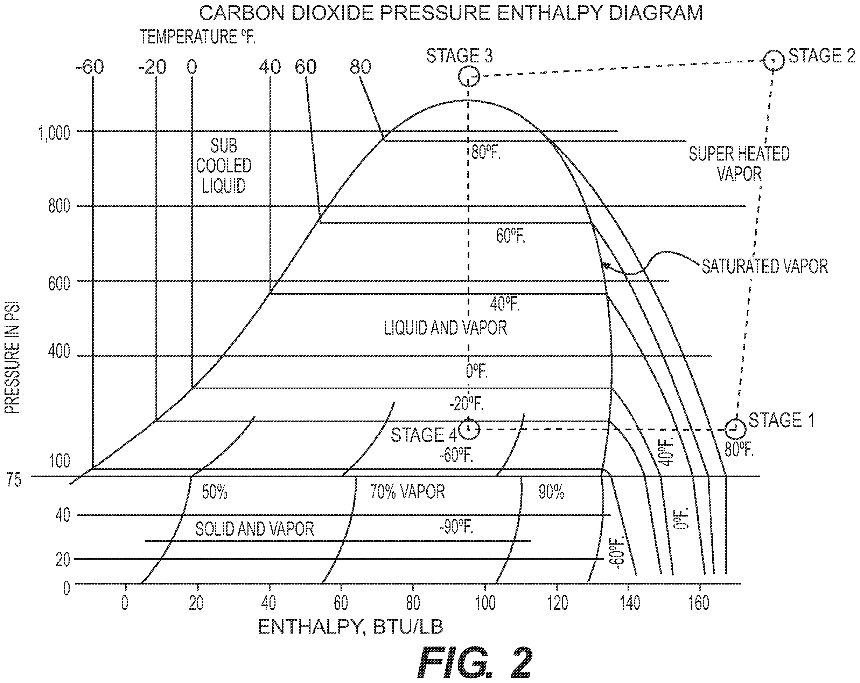

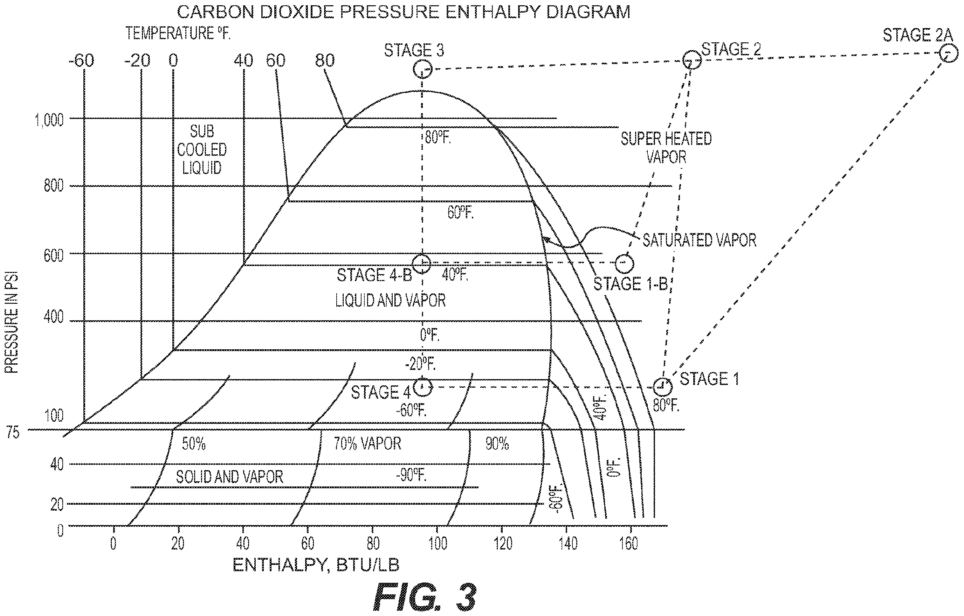

For purposes of illustration and not limitation, a zeolite 13X/CO₂ adsorption system 100 is provided, as depicted schematically in Figure 1. A Mollier Diagram for carbon dioxide at various temperatures and pressures for this embodiment is shown in Figures 2 and 3 for reference. In this embodiment, two vessels 111 and 112 are maintained in an adsorption mode and a desorption mode, respectively. When one vessel is in the adsorption mode, the other vessel is in the desorption mode and vice versa. In this example, the sorbent material is zeolite 13X and the working fluid is CO₂. For the vessel in the adsorption mode, carbon dioxide is adsorbed by the zeolite 13X at a pressure of about 140 psi and a temperature of about 95°F (35 °C). These conditions are denoted in Figure 2 as Stage 1.

After adsorption is complete, the adsorbent bed is isolated (e.g., by operating the relevant valve (e.g., valve 141 for vessel 111 or valve 142 for vessel 112)) and heated using unutilized heat from a petroleum refining or chemical process. The adsorption mode can last for several seconds (e.g., 10 seconds) to several minutes. The duration of the adsorption mode varies based upon the adsorbent material and fluid selected. Unutilized heat 121 or 122 is applied to the vessel in order to desorb the carbon dioxide, thus initiating the desorption mode. Using the unutilized heat, the vessel is heated to about 212°F (100 °C) in this particular embodiment. A pressurized stream is generated due to desorption of CO₂ from the 13X sorbent material as the adsorbent bed heats to 212°F (100 °C). In response to operation of a back pressure regulator valve (e.g., valve 113 for vessel 111 or valve 114 for vessel 112), high pressure CO₂ is released
from the vessel to pressure damper or cooler 115 at a preset pressure (e.g., ∼ 1400 psig (8650 kPag)), which is denoted in Figure 2 as stage 2. The temperature of the CO2 is approximately 212°F (100 °C).

The pressurized CO2 stream is cooled in the pressure damper/cooler 115 to approximately 110°F (43.3 °C), which is denoted as stage 3 in Figure 2. As a result, the pressure of the cooled CO2 stream in the line 131 is approximately 1380psi (9515 kPa) and the temperature is approximately 110°F (43.3 °C). The cooled working fluid stream is subsequently expanded adiabatically using an expansion valve 116 to about 140 psi (965 kPa) and -40°F (-40 °C), which is denoted as stage 4 in Figure 2. The expansion valve 116 may be a flow restrictor or a needle valve to restrict but not stop flow. This cooled stream 132 can be used as a high quality refrigeration load for many different applications within refineries or similar facilities where unutilized heat is readily available. For example, the refrigerated CO2 can be directed to a heat exchanger 118 to chill process streams within refineries and chemical plants.

After performing the refrigeration operation within the exchanger 118, the carbon dioxide of this representative embodiment can have a temperature of about 60°F to 100°F (15.6 °C to 37.8 °C) and a pressure of about 140psi (965 kPa). The carbon dioxide working fluid 133 is then recycled back to one of the vessels for use in a subsequent adsorption mode.

The CO₂/zeolite 13X system has a pressure index of greater than 3.5. The pressure index is determined in accordance with the procedure set forth below.

Alternatively, higher temperature heat can be applied to desorb more working fluid molecules from the adsorption bed. As shown in Figure 3, and for purposes of illustration and not limitation, stage 2 is now stage 2A, in which a higher-temperature unutilized heat source is used to heat the bed to 450°F (232.2 °C), instead of 212°F (100 °C). The pressurized stream is to be cooled to 110°F (43.3 °C) before expansion. It, therefore, will require a much higher amount of cooling media at stage 2. The efficiency of this alternative system based on a 450°F (232.2 °C) heat source, using the selection of zeolite 13X and carbon dioxide, will be significantly different as it requires higher level of heating and cooling. It is understood, however, that a selection of sorbent material and fluid based on a higher level heat pressure index can produce a sorption system that is better suited for a higher quality of heat.

For purposes of the above discussion, each vessel can be a shell in tube-type configuration with adsorbents in the tube. The vessel can have an inner diameter of about 5 ft (1.5 m) and contains tubes having a length of about 20 ft (6 m). Other suitable vessels can be used. Furthermore, exchanges other than shell-in-tube heat exchanges can be selected based on ordinary skill in the art.

This example is provided for illustrative purposes; other sorbent materials and fluids can be used in the place of, or in addition to, zeolite 13X and CO₂. Additional details of similar adsorption systems are disclosed in U.S. Patent Application No. 12/603,243 entitled, "System Using Unutilized Heat for Cooling and/or Power Generation."

In accordance with one aspect of the present application, an adsorption system for generating power and chilling is provided. The adsorption system includes a first vessel containing a sorbent material in fluid communication with a working fluid and operatively connected to a heat source to yield a feed of working fluid at a supercritical state, a generator in fluid communication with the feed of working fluid at supercritical state to yield power and a feed of working fluid in an at least partially condensed state, and an evaporator in fluid communication with the feed of working fluid in the at least partially condensed state to yield chilling and a feed of uncondensed working fluid. In one embodiment, the heat source is an unutilized heat source or stream. For example, the unutilized heat source is from a chemical processing or petrochemical refining operation.

The system can also include a second vessel containing sorbent material in fluid communication with the working fluid and operatively connected to a heat source to yield a second feed of working fluid at a supercritical state. Each of the first vessel and the second vessel has a sorption mode and a desorption mode, wherein in the desorption mode the working fluid is released from the sorbent material in response to the heat source, and wherein in the sorption mode, the working fluid is sorbed by the sorbent material, wherein when the first vessel is operating in the adsorption mode, the second vessel is operating in the desorption mode and, wherein when the first vessel is operating in the desorption mode, the second vessel is operating in the adsorption mode.

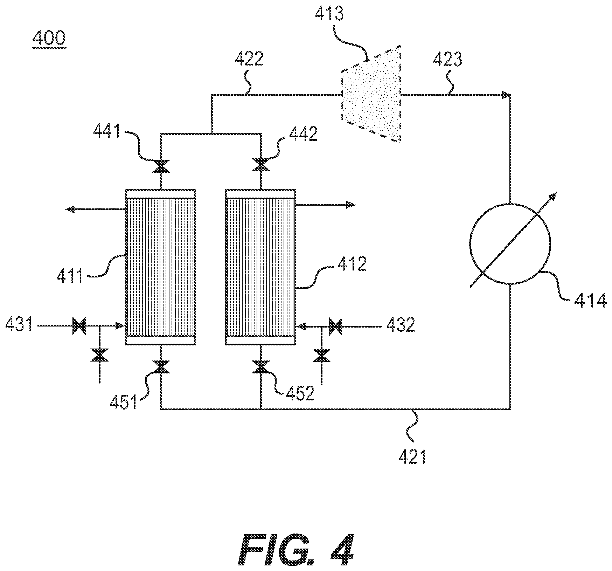

For the purpose of illustration and not limitation, an adsorption system 400 in accordance with one aspect of the present application is illustrated in Figure 4. The adsorption system 400 includes a first vessel 411, a second vessel 412, a generator 413, and an evaporator 414 for which cooling is desired. The first and second vessel 411 and 412 can be a shell-in-tube type configuration with the sorbent material in the tubes. For example, the first and second vessels can have an inner diameter of about 5 feet (1.5 m) and contain tubes having a length of about 20 feet (6 m). Other vessel sizes are considered to be well within the scope of the present application. Furthermore, the present application is not limited to shell-in-tube heat exchangers, other exchangers and other vessels can be selected based on ordinary skill in the art and are considered to be well within the scope
of the present application including but not limited to the use of sorbent beds, structured adsorbents, and hollow fiber adsorbents.

An unutilized heat stream 431 passes through the first vessel 411. Unutilized heat contained in the stream 431 passes through the walls of the line containing the stream into the first vessel 411. An unutilized heat stream 432 passes through the second vessel 412. Unutilized heat contained in the stream 432 passes through the walls of the line containing the stream into the second vessel 412. The unutilized heat streams 431 and 432 can supply from the same unutilized heat source or separate unutilized heat sources. Alternatively or additionally, vessels 411 and 412 can also be adapted to receive a feed of cooling media to regenerate the adsorbents housed therein.

A valve assembly 441 is interposed between the first vessel 411 and the generator 413. In this embodiment, the valve assembly 441 functions as a back pressure regulator which permits the working fluid to escape from the first vessel 411 at a predetermined or pre-set pressure. The predetermined or pre-set pressure can range, for example, from about 500 psig (3450 kPag) to about 3000 psig (20680 kPag), which is dependent upon the amount of sorbent material contained in the vessel and the temperature of the unutilized heat stream. A second valve assembly 442 is interposed between the second vessel 412 and the generator 413. Like the first valve assembly 441, the second valve assembly 442 functions as a back pressure regulator, which permits the working fluid in the second vessel to escape from the second vessel 412 at a pre-set pressure.

In operation, the first vessel 411 is in fluid communication with a feed of working fluid 421 fed to the first vessel at pressure ∼100 psia (689 kPaa) and temperature -100 F (37.8 °C). A control valve 451 controls the flow of working fluid to the first vessel 411. Similarly, the second vessel 412 is in fluid communication
with a feed of working fluid 421 fed to the second vessel at pressure 100 psia (689 kPaa) and temperature 100 F (37.8 °C). A control valve 452 controls the flow of fluid to the second vessel 412. When the working fluid 421 is fed to the first vessel 411, the working fluid is adsorbed onto a sorbent material contained in the first vessel 411. Similarly, when the working fluid is fed to the second vessel 412, the working fluid is adsorbed onto the sorbent material contained in the second vessel 412.

In one embodiment, the first and second vessels 411 and 412 operate in tandem. The working fluid 421 flows into the first vessel 411 when the valve 451 is open. The valve 451 remains open until equilibrium is established within the first vessel 411. The adsorption mode can last for several seconds (e.g., ∼10 seconds) to several minutes. The duration of the adsorption mode varies based upon the adsorbent material and fluid selected. The unutilized heat stream 431 passes through the first vessel 411 such that the sorbent material and the working fluid are heated, which results in the desorption of the working fluid from the sorbent material. This increases the pressure of the working fluid contained in the first vessel 411. Once the pre-set pressure is reached, the working fluid is released from the first vessel 411 via the valve assembly 441, to yield a feed of working fluid at a super-critical state 422 at pressure -1600 psia (11030 kPaa) and temperature -255 F (123.9 °C).

The feed of working fluid at a supercritical state 422 is used to run to the generator 413 to generate power. The generator is run using a turbine, a turboexpander or any other suitable device to create shaft work to be able to run the generator for power. It is also contemplated that the generator may also be used to drive rotating equipment such as pumps or compressors to perform work on a process stream. Additionally, the device yields a feed of working fluid in an at least partially condensed state 423 at a pressure about 100 psia (689 kPaa) and temperature -58 F (-50 °C). In one embodiment, the feed of working fluid at supercritical
state 422 passes through the generator to either generate electricity or perform work by driving a shaft or other suitable mechanism. In accordance with an aspect of the present invention, the amount of power generated is 0.95 mega watts (MW) based on 60,000 lb/hr CO₂ flow rate (27216 kg/hr). It is contemplated that the amount of power generated may vary based upon the system components.

The feed of working fluid in an at least partially condensed state 423 is fed to an evaporator 414 to provide chilling and a feed of uncondensed working fluid. The uncondensed working fluid 421 is then to be reintroduced to the first or second vessel. In an exemplary embodiment the working fluid in an at least partially condensed state 423 is processed through an evaporator to generate chilling by using the latent heat of vaporization as well as sensible heat of the working fluid, although other suitable vessels to create chilling can be utilized. The chilling generated can be used in many refinery processes. For example, the chilling can be used in a heat exchanger to cool a process stream for refining or petrochemical processing operations. In such an arrangement, the unutilized heat, which normally would be lost, is recaptured and used to perform cooling of another process stream. For example, chilling can be used to cool water to provide cooling water to an overhead condenser in a distillation tower. Chilling can be used to recover gas molecules from a fuel stream. The chilling can also be used in cooling the air intake of a gas turbine generator to improve power output.

The present application is not intended to be limited for use in process streams in refining and petrochemical processing applications. It is contemplated that the heat exchanger can be used in connection with a building cooling system located in one of the buildings located at the facility such that the unutilized heat can be used to cool one or more of the buildings. It is also contemplated that the system can be used in connection with air conditioning using exhaust heat from automobiles.

If tandem processing is desired through the second vessel, the valve 451 is closed such that after the passing through the evaporator 414, the working fluid at a pressure close to 100 psia (689 kPaa) and temperature -100 F (37.8 °C), is fed to the second vessel through open control valve 452. The valve 452 remains open until equilibrium is established within the second vessel 412. As mentioned above, the adsorption mode can last for several seconds (e.g., ∼10 seconds) to several minutes. The duration of the adsorption mode varies based upon the adsorbent material and fluid selected. The unutilized heat stream 432 passes through the second vessel 412 such that the sorbent material and the working fluid are heated, which results in the desorption of the working fluid from the sorbent material. This increases the pressure of the working fluid contained in the second vessel 412. Once the pre-set pressure is reached, the working fluid is released from the second vessel 412 via valve assembly 442, to yield a feed of working fluid at a supercritical state 422. The working fluid passes through the system, as described above. After passing through the evaporator 414, the working fluid is returned to the first vessel 411.

In this manner, the first and second vessels 411 and 412 are operated in tandem such that one is operating in an adsorption mode when the other is operating in a desorption mode and vice versa. With such an arrangement, the first and second vessels 411 and 412 operate to provide a continuous supply of working fluid to the generator 413.

In one embodiment of this application, the working fluid is selected from carbon dioxide, methane, ethane, propane, butane, ammonia and chlorofluorocarbons (e.g., Freon™), other refrigerants, or other suitable fluids. The sorbent material is selected from zeolites, metal organic frameworks (MOFs), zeolitic imidazolate frameworks (ZIFs), ionic liquids, silicagel, adsorbing polymers, carbon, and activated carbon, and combinations thereof. In one embodiment the working fluid is carbon dioxide and/or the sorbent material is a zeolite. In one embodiment the working fluid is carbon dioxide and the zeolite is a zeolite X, preferably a zeolite 13X.

The present application also provides an adsorption process for generating both power and chilling. The process includes adsorbing a working fluid onto a sorbent material, heating the sorbent material to desorb the working fluid from the sorbent material at a supercritical state, directing the desorbed fluid to drive a generator to generate power or do shaft work and to at least partially condense the desorbed working fluid, and evaporating the at least partially condensed desorbed fluid to yield chilling and a feed of uncondensed working fluid. The process can use any of the features described above for the adsorption system. In one embodiment, the heating is provided by unutilized heat from one of a refining operation and chemical processing operation. For example, the unutilized heat can be at a temperature of 450 F (232.2 °C) or lower

It is of note that the adsorption system and process described herein do not require the use of a pump or additional components to facilitate movement of the working fluid through the system.

In accordance with the present invention, it has been discovered that the generation of power and chilling simultaneously is a more efficient and economical use of waste heat available in refineries compared to the generation of chilling or power alone. It is desirable to simultaneously integrate power and chilling generation using waste heat within refinery and petro-chemical plants (e.g. in a distillation column, chilling can be used to lower the overhead temperature to improve throughput and power can be used to pump feed to the distillation column reboiler). The integration of recovered waste heat back in to refinery and petrochemical processes improves the efficiency of the individual process and the facility as a whole reducing the need to consume additional fuel. This may result in a reduction of carbon dioxide emissions.

The table below compares generation of power and chilling together with power or chilling alone. The examples are based on the use of a CO₂-Zeolite 13X combination. The adsorber/desorber bed is a shell and tube design with sorbent material packed inside the tube. This comparison is based on same amount of gas flow 60,000 lb/hr CO2 (27216 kg/hr). The equipment size of adsorber/desorber beds is related with thermal swing time of the process. Each adsorber/desorber vessel may have an inner diameter of about 5 ft (1.5 m) and contains tubes having a length of about 20 ft (6 m). The process scheme illustrated in Figure 1 can be used for the chilling only case. To generate both power and chilling, the process scheme illustrated in Figure 4 can be utilized. To generate power only, the process scheme is similar to Figure 4 without the evaporator.

| | WAS TE HEAT MW_{TH} | CHILLI NG MW_{C} | POWE R MW_{E} | EFFICIEN CY % | INLET PRESSU RE (PSIA) | OUTLET PRESSU RE (PSIA) | INLE T TEM P (F) | OUTL ET TEMP. (F) |
|---|---|---|---|---|---|---|---|---|
| Chilli ng Only | 6.45 | 1.38 | 0 | 21.4 | 1600 (11030 kPaa) | 100 (689 kPaa) | 112 (44.4 °C) | -58 (-50 °C) |
| Power Only | 6.45 | 0.0 | 0.95 | 14.7 | 1600 (11030 kPaa) | 100 (689 kPaa) | 255 (123. 9 °C) | -58 (-50 °C) |
| Chilli ng + Power | 6.45 | 0.73 | 0.95 | 26.0 | 1600 (11030 kPaa) | 100 (689 kPaa) | 255 (123. 9 °C) | -58 (-50 °C) |

In accordance with another aspect of the present application, an absorption system for generating power and chilling is provided. The absorption system includes an absorber to absorb a working fluid in a liquid sorbent, a pump in fluid communication with the absorber to yield a feed of pressurized liquid sorbent and absorbed working fluid, a heat source to heat the feed of pressurized liquid sorbent and absorbed working fluid to yield a feed of working fluid at a supercritical state, a generator in fluid communication with the feed of working fluid at a supercritical state to yield power and a feed of working fluid in an at least partially condensed state, and an evaporator in fluid communication with the feed of working fluid in the at least partially condensed state to yield chilling and uncondensed working fluid.

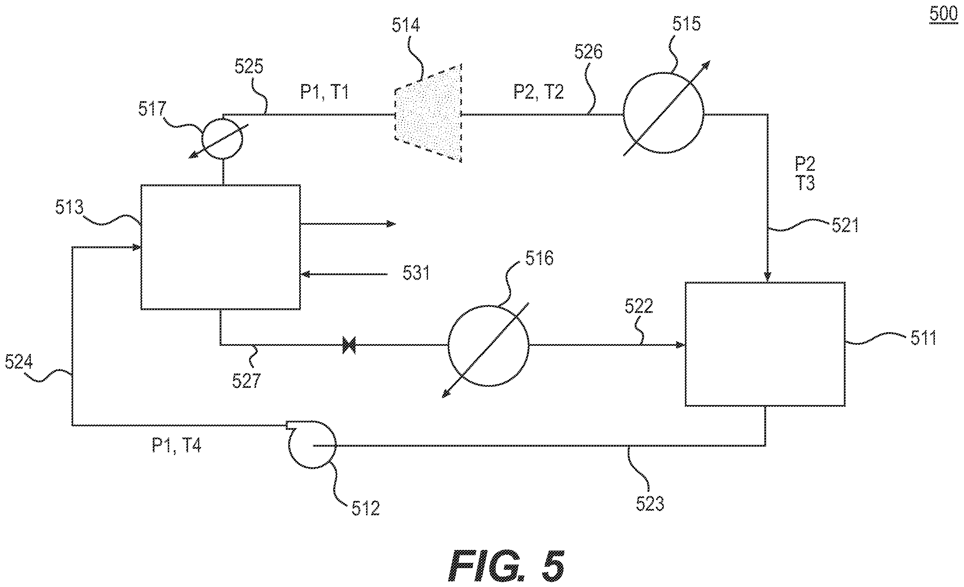

For the purpose of illustration and not limitation, an absorption system 500 in accordance with one aspect of the present application is illustrated in Figure 5. The absorption system 500 includes an absorber 511, a pump 512, a vapor generator 513, a generator 514, an evaporator 515, a cooler 516 and a cooler 517.

In operation, the absorber 511 is in fluid communication with a working fluid 521 fed to the absorber at a first pressure (∼560 psia) (3861 kPaa) and a first temperature (∼100 F) (37.8 °C) and a liquid sorbent 522. In the absorber 511, the working fluid 521 is absorbed in the liquid sorbent 522 to yield a liquid sorbent with an absorbed working fluid 523. The absorber 511 can be an absorption column or any other suitable vessel. During absorption there is heat generated in the absorber that can be removed from the absorber using cooling water, or any other suitable means, to maintain the absorber at a temperature favorable for absorbing the working fluid.

The pump 512 pumps the liquid sorbent with an absorbed fluid 523 from the absorber to a higher pressure to yield a feed of pressurized liquid sorbent and absorbed working fluid 524. The pressurized liquid sorbent and absorbed working fluid 524 is at a higher pressure (∼1400 psia) (8650 kPaa) and a second temperature (∼104 F) (40 °C), generally greater than (100 F) (37.8 °C). The present invention is not intended to be limited to the specified pressures and temperatures; rather, other temperatures and pressures are considered to be well within the scope of
the present invention provided such temperatures and pressures are suitable for the pressurized liquid sorbent and absorbed working fluid.

The feed of pressurized liquid sorbent and absorbed working fluid 524 is heated using a heat source which can include a vapor generator 513, e.g., a rectification column or any other suitable vessel. The heat source 531 can pass through the vapor generator, to disengage the working fluid from the liquid absorbent to yield a feed of working fluid at a supercritical state 525 and the liquid sorbent 527, which is fed to a cooler 516 before the liquid sorbent 522 is returned to the absorber 511. The cooler 516 can be in fluid communication with the vapor generator and can include cooling water. The feed of working fluid at a supercritical state 525 from the vapor generator 513 is passed through a cooler 517 to reduce the temperature from ∼275 F (135 °C) to ∼ 60F (15.6 °C). The pressure remains at ∼1400 psia (9650 kPaa). Other temperatures and pressures are considered to be well within the scope of the present invention. The unutilized heat stream or source 531 can be operatively connected to the vapor generator 513 such that unutilized heat from the unutilized heat source can be transferred to the liquid sorbent with an absorbed fluid contained within the vapor generator.

The feed of working fluid at a supercritical state 525 is used to run to a generator 514 to generate power. The generator can be a turbine, a turboexpander or any other suitable device to generate power or work. A working fluid is selected such that the generator yields a feed of working fluid in an at least partially condensed state 526 at a pressure about -560 psia (3861 kPaa) and a temperature -43 F (6.1 °C) less than 100 F (37.8). The present invention is not intended to be limited to the pressures and temperatures stated herein; rather, other temperatures and pressures are considered to be well within the scope of the present invention provided such temperatures and pressures yield the partially condensed state 526. In one embodiment, the feed of working fluid at
supercritical state 525 passes through the generator to either generate power or perform work by driving a shaft or other suitable mechanism. If implemented at a refinery, the power generated can be supplied to the power grid for refinery use or for supplying a third party. The amount of power generated by the system in accordance with the present invention may vary based upon the design of the system and the selected components. For example, the system may generate ∼32 kilo watts (KW) of power based on 45,000 lb/hr (20412 kg/hr) mixture of CO₂ and amyl acetate (stream 525). The molar concentration of amyl acetate in 525 is 3%. It is contemplated that the system may generate amounts in excess of 32 KW based upon the system design and other constraints.

The working fluid in an at least partially condensed state 526 is fed to an evaporator 515 to yield chilling and uncondensed working fluid 521 to be fed to the absorber 511. The evaporator 515 can be in fluid communication with the absorber 511. In an exemplary embodiment the working fluid in an at least partially condensed state 526 is processed through an evaporator 515 to generate chilling by using the latent heat of vaporization of the working fluid, although other suitable vessels to create chilling can be utilized. The chilling generated can be used in many refinery processes. For example, the chilling can be used in a heat exchanger to cool a process stream for refining or petrochemical processing operations. In such an arrangement, the unutilized heat, which normally would be lost, is recaptured and used to perform cooling of another process stream. Chilling can be used to cool water to provide cooling water to an overhead condenser in a distillation tower. Chilling can also be used to recover gas molecules from a fuel stream. The chilling can also be used in cooling the air intake of a gas turbine generator to improve power output.

In accordance with another aspect of the present application, an absorption system for generating power is provided. Power is generated using both gas phase expansion and liquid phase expansion. The absorption system includes an absorber to absorb a working fluid in a liquid sorbent, a pump in fluid communication with the absorber to yield a feed of pressurized liquid sorbent and absorbed working fluid, a heat source to heat the feed of pressurized liquid sorbent and absorbed working fluid to yield a feed of working fluid at a supercritical state, at least one generator.

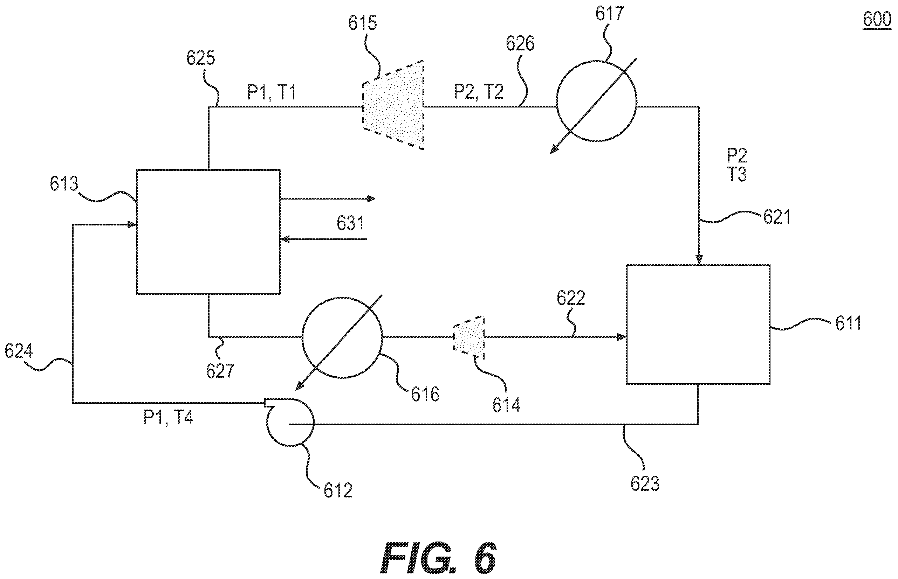

For the purpose of illustration and not limitation, an absorption system 600 in accordance with one aspect of the present application is illustrated in Figure 6. The absorption system 600 includes an absorber 611, a pump 612, a vapor generator 613, generators 614 and 615, a cooler 616 and a cooler 617.

In operation, the absorber 611 is in fluid communication with a working fluid 621 fed to the absorber at a first pressure (∼600psia) (4137 kPaa) and a first temperature (∼127 F) (52.8 °C) and a liquid sorbent 622. In the absorber 611, the working fluid 621 is absorbed in the liquid sorbent 622 to yield a liquid sorbent with an absorbed working fluid 623. The absorber 611 can be an absorption column or any other suitable vessel. During absorption there is heat generated in the absorber that can be removed from the absorber using cooling water, or any other suitable means, to maintain the absorber at a temperature favorable for absorbing the working fluid.

The pump 612 pumps the liquid sorbent with an absorbed fluid 623 from the absorber to a higher pressure to yield a feed of pressurized liquid sorbent and absorbed working fluid 624. The pressurized liquid sorbent and absorbed working fluid 624 is at a higher pressure (∼1200 psia) (8274 kPaa) and a second temperature (∼102 F) (38.9 °C). The present invention is not intended to be limited to the specified pressures and temperatures; rather, other temperatures and pressures are considered to be well within the scope of the present invention provided such
temperatures and pressures are suitable for the pressurized liquid sorbent and absorbed working fluid.

The feed of pressurized liquid sorbent and absorbed working fluid 624 is heated using a heat source which can include a vapor generator 613, e.g., a rectification column or any other suitable vessel. The heat source 631 can pass through the vapor generator, to disengage the working fluid from the liquid absorbent to yield a feed of working fluid at a supercritical state 625 and the liquid sorbent 627, which is fed to a cooler 616 and then to a generator 615 before the liquid sorbent 622 is returned to the absorber 611. The generator 615 is suitable for use in liquid phase expansion to generate. The generator 615 may be a twin screw expander, but other power generating assemblies are considered to be well within the scope of the present invention. The cooler 616 can be in fluid communication with the vapor generator 613 and can include cooling water. The feed of working fluid at a supercritical state 625 is at a pressure (∼1200 psia) (8274 kPaa) and a temperature (∼450 F) (232.2 °C). Other temperatures and pressures are considered to be well within the scope of the present invention. The unutilized heat stream or source 631 can be operatively connected to the vapor generator 613 such that unutilized heat from the unutilized heat source can be transferred to the liquid sorbent with an absorbed fluid contained within the vapor generator.

The feed of working fluid at a supercritical state 625 is used to run to a generator 614 to generate power. The generator 614 can be a turbine, a turboexpander or any other suitable device to generate power or work. A working fluid is selected such that the generator yields a feed of working fluid 626 at a pressure about -600 psia (4137 kPaa) and a temperature -398 F (203.3 °C). The present invention is not intended to be limited to the pressures and temperatures stated herein; rather, other temperatures and pressures are considered to be well within the scope of the present invention.

The working fluid 626 is fed to a cooler 617. The reduced temperature working fluid 621 from the cooler 617 is then fed back to the absorber 611.

While described, solely for the sake of convenience, largely in the context of a refining and petrochemical operation, the present application is not intended to be limited thereto. It is contemplated that, for example, the heat exchanger can be used in connection with a building cooling system located in one of the buildings located at the facility such that the unutilized heat can be used to cool one or more of the buildings.

Thus the absorption system generates power and chilling by recovering unutilized heat from an unutilized heat stream or source. The unutilized heat source can be used heat from a heat exchanger, or other process area of a chemical processing plant or petrochemical refining plant.

The absorption system includes a liquid sorbent or a mixture of liquid sorbents and a working fluid or a mixture of working fluids.

In various embodiments, various combinations of liquid sorbents and working fluids are considered to be within the scope of the present application. It should be noted that a combination that is suitable for application with a higher temperature unutilized heat stream may not be applicable for a lower temperature unutilized heat stream.

The liquid sorbent in the absorption system has an average heat of sorption (Q) between about 2 kcal/mole (8.4 kJ/mole) and about 25 kcal/mole (104.6 kJ/mole), or more preferably between about 3 kcal/mole (12.6 kJ/mole) and about 10 kcal/mole (41.8 kJ/mole).

In one embodiment of the present application, the working fluid is a gas and is selected from carbon dioxide, methane, ethane, propane, butane, ammonia, chlorofluorocarbons (e.g., Freon™), other refrigerants, or other suitable fluids. The liquid sorbent is selected from water, ethylene glycols, Triethylene glycol, polyethylene glycol, polyethylene glycol dimethyl ether, N-methyl-2-pyrrolidone, dimethylsulfoxide, potassium carbonate, amyl acetate, acetone, pyridine, ethyl alcohol, methyl alcohol, acetic acid, isobutyl acetate, acetic anhydride, ionic liquids, etc., or other suitable liquids and combinations thereof. In one embodiment, the working fluid is carbon dioxide and/or the liquid sorbent is N-methyl-2-pyrrolidone and ionic liquids.

In accordance with another aspect of the present application, a process for generating power and chilling is provided. The process includes absorbing a working fluid into a liquid sorbent to yield a liquid sorbent and absorbed working fluid, pressurizing the liquid sorbent and absorbed working fluid to increased pressure, heating the pressurized liquid sorbent and absorbed working fluid to desorb the working fluid from the sorbent material in a supercritical state, directing the desorbed working fluid to drive a generator to generate power and to at least partially condense the desorbed working fluid, and evaporating the at least partially condensed desorbed working fluid to yield chilling and uncondensed working fluid. The process can use any of the features described above for the absorption system. In one embodiment, the heating is provided by unutilized heat from one of a refining operation and chemical processing operation. For example, the unutilized heat is at a temperature of 450°F (232.2 °C) or lower.

### Pressure Index

Embodiments of the present application employ a "pressure index" that can be determined at various desorbing temperatures, which is used to determine suitable combinations of a sorbent material and a working fluid. These combinations are especially adaptable to be used in the sorption process disclosed herein, since they collectively maximize pressurization of working fluid (ΔP) from available energy sources, which are often, but not necessarily, low grade heat sources primarily intended to be used for some other specific purpose (e.g., waste heat).

The pressure index is determined by the following method. One hundred (100) grams of sorbent material are placed in a 1 liter vessel designed to be isolated from associated equipment with existing valves on both ends of the vessel. The vessel also has indicators to measure the inside pressure and temperature. The vessel is flushed and filled with a pure fluid (e.g., CO₂) at one atmospheric pressure. The sorbent material adsorbs fluid and the sorbent may heat up. The vessel is equilibrated at 298 K (77 °F) and 1 atmospheric pressure (101.3 kPa), this sorbing pressure being defined as P_{I} = 1.0. The vessel is heated to a pre-selected desorbing temperature (e.g., 348 K i.e. 167 °F). When the vessel and sorbent material reach the pre-selected desorbing temperature, the internal vessel pressure is measured to determine P_{F}. The pressure index is defined as the ratio of P_{F} to P_{I}.

As noted above, embodiments of the present application make use of a lower temperature of unutilized heat. In order to select a sorbent material/fluid combination that is preferred for use with low level heat (e.g., sorption systems that utilize low grade unutilized heat), it is often desirable or necessary to ascertain at least the low level heat pressure index, as determined above. A pressure index of at least 1.5 is generally appropriate for use in low level unutilized heat applications. Nevertheless, other embodiments of the present application can use high level heat sources. Thus in these embodiments, it is desirable to select a high level heat pressure index. In such cases, combinations of sorbent material and working fluid can have a pressure index as low as 1.2.

### Sorbent Materials

As noted above, and as used in this application, the term "sorbent material" refers to a material that reversibly binds the working fluid. Sorbent materials include, but are not limited to, absorbents and adsorbents.

Absorbent materials that can be used in embodiments of the present application include, but are not limited to, water, glycols, amyl acetate, acetone, pyridine, ethyl alcohol, methyl alcohol, acetic acid, isobutyl acetate, acetic anhydride, ionic liquids, etc.

Adsorbent materials that can be used in embodiments of the present application include, but are not limited to, metal-organic framework-based (MOF-based) sorbents, zeolitic imidazole framework (ZIF) sorbent materials, zeolites and carbon.

MOF-based sorbents include, but are not limited to, MOF-based sorbents with a plurality of metal, metal oxide, metal cluster or metal oxide cluster building units. As disclosed in International Published Application No. WO 2007/111738, the metal can be selected from the transition metals in the periodic table, and beryllium. Exemplary metals include zinc (Zn), cadmium (Cd), mercury (Hg), beryllium
(Be) and copper (Cu). The metal building units can be linked by organic compounds to form a porous structure, where the organic compounds for linking the adjacent metal building units can include 1,3,5-benzenetribenzoate (BTB); 1,4-benzenedicarboxylate (BDC); cyclobutyl 1,4-benzenedicarboxylate (CB BDC); 2-amino 1,4 benzenedicarboxylate (H2N BDC); tetrahydropyrene 2,7-dicarboxylate (HPDC); terphenyl dicarboxylate (TPDC); 2,6 naphthalene dicarboxylate (2,6-NDC); pyrene 2,7-dicarboxylate (PDC); biphenyl dicarboxylate (BDC); or any dicarboxylate having phenyl compounds.

Specific materials MOF-based sorbent materials include: MOF-177, a material having a general formula of Zn₄O(1, 3, 5-benzenetribenzoate)₂; MOF-5, also known as IRMOF-I, a material having a general formula of Zn₄O(1,4-benzenedicarboxylate)₃; IRMOF-6, a material having a general formula of Zn₄O(cyclobutyl 1,4-benzenedicarboxylate); IRMOF-3, a material having a general formula of Zn₄O(2-amino 1,4 benzenedicarboxylate)₃; and IRMOF-11, a material having a general formula of Zn₄O(terphenyl dicarboxylate)₃, or Zn₄O(tetrahydropyrene 2,7-dicarboxylate)₃; IRMOF-8, a material having a general formula of Zn₄O(2,6 naphthalene dicarboxylate)₃; and Cu-BTC MOF, a material having a general formula of C₁₈H₆Cu₃O₁₂ (copper benzene-1,3,5-tricarboxylate).

Exemplary zeolitic imidazole framework (ZIF) sorbent materials include, but are not limited to, ZIF-68, ZIF-60, ZIF-70, ZIF-95, ZIF-100 developed at the University of California at Los Angeles and generally discussed in Nature 453, 207-211 (8 May 2008).

Zeolite adsorbent materials include, but are not limited to, aluminosilicates that are represented by the formula M_{2/n}O_{˙}Al₂O_{3˙}ySiO_{2˙}wH₂O, where y is 2 or greater, M is the charge balancing cation, such as sodium, potassium, magnesium and calcium, N is the cation valence, and w represents the moles of water contained in the zeolitic voids. Examples of zeolites that can be included in the methods and systems of the present application include natural and synthetic zeolites.

Natural zeolites include, but are not limited to, chabazite (CAS Registry No. 12251-32-0; typical formula Ca₂[(AlO₂)₄(SiO₂)₈]_{˙}13H₂O), mordenite (CAS Registry No. 12173-98-7; typical formula Na₈[(AlO₂)₈(SiO₂)₄₀]_{˙}24H₂O), erionite (CAS Registry No. 12150-42-8; typical formula (Ca, Mg, Na₂, K₂)_{4.5}[(AlO₂)₉(SiO₂)₂₇]_{˙}27H₂O), faujasite (CAS Registry No. 12173-28-3, typical formula (Ca, Mg, Na₂, K₂)_{29.5}[(AlO₂)₅₉(SiO₂)₁₃₃]_{˙}235H₂O), clinoptilolite (CAS Registry No. 12321-85-6, typical formula Na₆[(AlO₂)₆(SiO₂)₃₀]_{˙}24H₂O) and phillipsite (typical formula: (0.5Ca, Na, K)₃[(AlO₂)₃(SiO₂)₅]_{˙}6H₂O).

Synthetic zeolites include, but are not limited to, zeolite A (typical formula: Na₁₂[(AlO₂)₁₂(SiO₂)₁₂]_{˙}27H₂O), zeolite X (CAS Registry No.68989-23-1; typical formula: Na₈₆[AlO₂)₈₆(SiO₂)₁₀₆]_{˙}264H₂O), zeolite Y (typical formula: Na₅₆[(AlO₂)₅₆(SiO₂)₁₃₆]_{˙}250H₂O), zeolite L (typical formula: K₉[(AlO₂)₉(SiO₂)₂₇]_{˙}22H₂O), zeolite omega (typical formula: Na_{6.8}TMA_{1.6}[AlO₂)₈(SiO₂)₂₈].21H₂O, where TMA is tetramethylammonium) and ZSM-5 (typical formula: (Na, TPA)₃[(AlO₂)₃(SiO₂)₉₃]˙16H₂O, where TPA is tetrapropylammonium).

Zeolites that can be used in the embodiments of the present application also include the zeolites disclosed in the Encyclopedia of Chemical Technology by Kirk-Othmer, Volume 16, Fourth Edition, under the heading "Molecular Sieves,".

Synthetic zeolite sorbent materials are commercially available, such as under the Sylosiv^{®} brand from W.R. Grace and Co. (Columbia, Md.) and from Chengdu Beyond Chemical (Sichuan, P.R. China). For example, Sylosiv^{®} A10 is one commercially available zeolite 13 X product.

### Working Fluids

As noted above, the term fluid refers to a liquid or gas that reversibly binds to the sorbent material. Non-limiting examples of fluids that can be used in accordance with the present application include carbon dioxide, methane, ethane, propane, butane, ammonia, chlorofluorocarbons (e.g., Freon™), and other suitable fluids and refrigerants. In certain particular embodiments, any suitable fluid or refrigerant satisfying the above-described pressure index can be used.

### Selection of Sorbent Materials and Fluids

In accordance with another aspect of the invention, a method is provided for selecting a sorbent material and a working fluid for use in combination in an unutilized-heat sorbent system within a chemical processing or petrochemical refining operation. The method generally includes identifying a sorbent that meets the pressure index criterion of at least 1.5. In one embodiment, the sorbent material and the working fluid for use in combination are selected if the measured internal pressure within the secured chamber is at least two times, or at least three times, or at least four times, or at least six times, or at least eight times the sorbing pressure. The sorption system can be used to generate power and chilling. The above-described method is not applicable to absorption systems.

### Heat of Sorption

Preferably, the sorbent material and fluid couple has an average heat of sorption (Q) from about 2 kcal/mole (8.4 kJ/mole) to about 25 kcal/mole (104.6 kJ/mole), and more preferably from about 4 kcal/mole (16.7 kJ/mole) to about 10 kcal/mole (41.8 kJ/mole) for heat sources up to 450 °F (232.2 °C). The heat of sorption should be between 2 kcal/mole (8.4 kJ/mole) to about 40 kcal/mole (167.4 kJ/mole) if a higher temperature heat source (e.g., greater than 450 °F (232.2 °C) and up to 1700 °F (926.7 °C)) is available. The sorbent material should also have a high capacity for the working fluid.

### Uses of Sorbent Systems of the Present Application

The adsorbent systems of the present application can be used in various applications provided the setting allows for the presence of a vessel that contains a sorbent material, a supply of working fluid, a heat supply and means to effectively direct the desorbed fluid to a generator to generate power and a evaporator to provide chilling. For example, the desorbed gas can be directed to a turboexpander to provide power.

The absorbent systems and methods of the present application can be used in various applications provided the setting allows for the presence of a absorber for absorbing a working fluid in a liquid sorbent and a vapor generator for desorbing the working fluid from the liquid sorbent, a supply of working fluid, a heat supply and a pump, and means to effectively direct the desorbed fluid to a generator to generate power and a evaporator to provide chilling thereto.

Possible applications for sorption systems of the present application include residential (for generating air conditioning in the summer and a heat pump in the winter), vehicular (where the on-board air conditioning utilizes exhaust heat) and industrial (refining and chemical plants).

In one embodiment of the present application, the sorbent system or method is used within a chemical or petrochemical plant, and the desorbed fluid is used to generate power and to provide chilling to aid in other process areas, particularly areas that rely on temperature differences to separate components of a mixture. For example, the chilling can be used to recover liquefied petroleum gas (LPG, C³⁺) from flue gases going up a stack, or the chilling can be used to operate condensers to improve the effectiveness of vacuum distillation columns, particularly in the summer months.

By proper selection of the sorbent material and working fluid, the sorbent system or method can make effective use of lower grade heat than previously provided by sorption systems in the prior art. For example, in one embodiment of the present application, the heat supply is "unutilized heat" which has a temperature of from about 70°C (158 F) to about 300°C (572 F), more preferably from about 90°C (194 F) to about 180°C (356 F).

The present application is not to be limited in scope by the specific embodiments described herein. Indeed, various modifications of the invention in addition to those described herein will become apparent to those skilled in the art from the foregoing description and the accompanying figures.

It is further to be understood that all values are approximate, and are provided for description.

## Claims

1. A sorption system (400) for generating power and chilling, comprising:
(a) a first vessel (411) containing a sorbent material in fluid communication with a working fluid (421) and operatively connected to a heat source (431) to yield a feed of working fluid at a supercritical state (422);
(b) an evaporator (414) in fluid communication with a feed of working fluid in an at least partially condensed state (423) to yield chilling and a feed of uncondensed working fluid (421),
**characterized in that** the system further comprises:
(c) a generator (413) in fluid communication with the feed of working fluid at supercritical state (422) to yield power and the feed of working fluid in the at least partially condensed state (423).

2. The sorption system (400) according to claim 1, further comprising: a second vessel (412) containing sorbent material in fluid communication with the working fluid (421) and operatively connected to a heat source (432) to yield a second feed of working fluid at a supercritical state (422).

3. The sorption system (400) of claim 2, wherein each of the first vessel (411) and the second vessel (412) has a sorption mode and a desorption mode, wherein in the desorption mode the working fluid is released from the sorbent material in response to the heat source, and wherein in the sorption mode, the working fluid is sorbed by the sorbent material, wherein when the first vessel (411) is operating in the adsorption mode, the second vessel (412) is operating in the desorption mode and, wherein when the first vessel (411) is operating in the desorption mode, the second vessel (412) is operating in the sorption mode.

4. A sorption system (500) for generating power and chilling, comprising:
(a) an absorber (511) to absorb a working fluid (521) in a liquid sorbent (522);
(b) a pump (512) in fluid communication with the absorber (511) to yield a feed of pressurized liquid sorbent and absorbed working fluid (524);
(c) a heat source (531) to heat the feed of pressurized liquid sorbent and absorbed working fluid (524) to yield a feed of working fluid at a supercritical state (525);
(d) an evaporator (515) in fluid communication with a feed of working fluid in an at least partially condensed state (526) to yield chilling and uncondensed working fluid (521),
**characterized in that** the system further comprises:
(e) a generator (514) in fluid communication with the feed of working fluid at a supercritical state (525) to yield power and the feed of working fluid in the at least partially condensed state (526).

5. The sorption system (500) of claim 4, wherein the evaporator (515) is in fluid communication with the absorber (511).

6. A sorption system (600) for generating power, comprising:
(a) a first vessel (611) in fluid communication with a working fluid (621) and a liquid sorbent material (622), wherein the working fluid (621) is adsorbed in the liquid sorbent (622) in the first vessel (611) to yield a feed of liquid sorbent with an adsorbed working fluid (623);
(b) a heat source (613) in fluid communication with the feed of liquid sorbent with the adsorbed working fluid (623) and a heat source (631), wherein the heat source (613) disengages the liquid sorbent from the adsorbed working fluid to create a feed of working fluid at a supercritical state (625) and a feed of liquid sorbent (627);
**characterized in that** the system further comprises: (c)
a first generator (615) in fluid communication with the feed of working fluid at supercritical state (625) to yield power and a feed of working fluid in an at least partially condensed state (626) in fluid communication with the first vessel (611);
and
(d) a second generator (614) in fluid communication with the feed of liquid sorbent (627)to yield power and a feed of liquid sorbent (622) in fluid communication with the first vessel (611).

7. The sorption system (600) according to claim 6, wherein the second generator (614) is a twin screw expander.

8. The sorption system (600) according to any one of claims 6 or 7, wherein the first generator (615) is a turbo expander.

9. The sorption system (400, 500, 600) according to any one of the preceding claims, wherein the heat source (431, 531, 631) is an unutilized heat source, and is preferably a vapor generator.

10. The sorption system (500) of claim 9, wherein the heat source is a vapor generator (513) and the system further comprises a cooler (517) in fluid communication with the vapor generator, the cooler preferably including cooling water.

11. The sorption system (400, 500, 600) according to any one of claims 9 or 10, wherein the heat source (431, 531, 631) is a rectification column.

12. A process for generating power and chilling comprising:
adsorbing a working fluid (421) onto a sorbent material;
heating the sorbent material to desorb the working fluid from the sorbent material at a supercritical state;
directing the desorbed fluid to drive a generator (413) to generate power and to at least partially condense the desorbed working fluid; and
evaporating the at least partially condensed desorbed fluid to yield chilling and a feed of uncondensed working fluid (421).

13. The sorption system (400) according to any one of claims 1 to 3 or the process of claim 12, wherein the sorbent material is selected from zeolites, metal organic frameworks (MOFs), zeolitic imidazolate frameworks (ZIFs), silicagel, adsorbing polymers, carbon, and activated carbon, and combinations thereof, and, preferably, the sorbent material is a zeolite.

14. A process for generating power and chilling comprising:
absorbing a working fluid (521) into a liquid sorbent (522) to yield a liquid sorbent and absorbed working fluid (523);
pressurizing the liquid sorbent and absorbed working fluid to increased pressure;
heating the pressurized liquid sorbent and absorbed working fluid (524) to desorb the working fluid from the sorbent material in a supercritical state;
directing the desorbed working fluid to drive a generator (514) to generate power and to at least partially condense the desorbed working fluid; and
evaporating the at least partially condensed desorbed working fluid (526) to yield chilling and uncondensed working fluid (521).

15. A process for generating power, comprising:
absorbing a working fluid (621) into a liquid sorbent (622) to yield a liquid sorbent and absorbed working fluid (623);
pressurizing the liquid sorbent and absorbed working fluid to increased pressure;
heating the pressurized liquid sorbent and absorbed working fluid (624) to desorb the working fluid from the liquid sorbent in a supercritical state;
directing the desorbed working fluid to drive a first generator (617) to generate power and to at least partially condense the desorbed working fluid; and
directing the liquid sorbent (627) to drive a second generator (614) to generate power.

16. The sorption system (400, 500, 600) according to any one of claims 1 to 11 or 13 or the process according to any one of claims 12 to 15, wherein the working fluid is selected from carbon dioxide, methane, ethane, propane, butane, ammonia and chlorofluorocarbons, and is preferably carbon dioxide.

17. The process according to any one of claims 12 to 15, wherein the heating is provided by unutilized heat from one of a refining operation and chemical processing operation, said unutilized heat being at a temperature of 450°F (232.2 °C) or lower.

## Patentansprüche

1. Sorptionssystem (400) zum Erzeugen von Energie und zum Kühlen umfassend
(a) ein erstes Gefäß (411), das ein Sorptionsmaterial in Fluidverbindung mit einem Arbeitsfluid (421) umfasst und betriebstüchtig mit einer Wärmequelle (431) verbunden ist, um ein Einsatzmaterial aus Arbeitsfluid in einem überkritischen Zustand (422) zu erhalten,
(b) einen Verdampfer (414) in Fluidverbindung mit einem Einsatzmaterial aus Arbeitsfluid in einem mindestens teilweise kondensierten Zustand (423), um Kühlung und ein Einsatzmaterial aus unkondensiertem Arbeitsfluid (421) zu erhalten, **dadurch gekennzeichnet, dass** das System ferner
(c) einen Generator (413) in Fluidverbindung mit dem Einsatzmaterial aus Arbeitsfluid in überkritischem Zustand (422) umfasst, um Energie und das Einsatzmaterial aus Arbeitsfluid in dem mindestens teilweise kondensierten Zustand (423) zu erhalten.

2. Sorptionssystem (400) nach Anspruch 1, das ferner ein zweites Gefäß (412) umfasst, das Sorptionsmittel in Fluidverbindung mit dem Arbeitsfluid (421) umfasst und betriebsfähig mit einer Wärmequelle (432) verbunden ist, um ein zweites Einsatzmaterial aus Arbeitsfluid in einem überkritischen Zustand (422) zu erhalten.

3. Adsorptionssystem (400) nach Anspruch 2, bei dem jedes von dem ersten Gefäß (411) und dem zweiten Gefäß (412) einen Sorptionsmodus und einen Desorptionsmodus aufweist, wobei in dem Desorptionsmodus das Arbeitsfluid in Reaktion auf die Wärmequelle aus dem Sorptionsmaterial freigesetzt wird und wobei in dem Sorptionsmodus das Arbeitsfluid durch das Sorptionsmaterial sorbiert wird, wobei, wenn das erste Gefäß (411) im Sorptionsmodus betrieben wird, das zweite Gefäß (412) im Desorptionsmodus betrieben wird, und wobei, wenn das erste Gefäß (411) im Desorptionsmodus betrieben wird, das zweite Gefäß (412) im Sorptionsmodus betrieben wird.

4. Sorptionssystem (500) zum Erzeugen von Energie und zum Kühlen umfassend
(a) einen Absorber (511) um ein Arbeitsfluid (521) in einem flüssigen Sorptionsmittel (522) zu absorbieren,
(b) eine Pumpe (512) in Fluidverbindung mit dem Absorber (511), um ein Einsatzmaterial aus unter Druck stehendem flüssigen Sorptionsmittel und absorbiertem Arbeitsfluid (524) zu erhalten,
(c) eine Wärmequelle (531), um das Einsatzmaterial aus unter Druck stehendem flüssigen Sorptionsmittel und absorbiertem Arbeitsfluid (524) zu erwärmen, um ein Einsatzmaterial aus Arbeitsfluid in einem überkritischen Zustand (525) zu erhalten,
(d) einen Verdampfer (515) in Fluidverbindung mit einem Einsatzmaterial aus Arbeitsfluid in einem mindestens teilweise kondensierten Zustand (526), um Kühlung und unkondensiertes Arbeitsfluid (526) zu erhalten,
**dadurch gekennzeichnet, dass** das System ferner einen Generator (514) in Fluidverbindung mit dem Einsatzmaterial aus Arbeitsfluid in einem überkritischem Zustand (525) umfasst, um Energie und das Einsatzmaterial aus Arbeitsfluid in dem mindestens teilweise kondensierten Zustand (526) zu erhalten.

5. Sorptionssystem (500) nach Anspruch 4, bei dem der Verdampfer (515) in Fluidverbindung mit dem Absorber (511) steht.

6. Sorptionssystem (600) zum Erzeugen von Energie umfassend
(a) ein erstes Gefäß (611) in Fluidverbindung mit einem Arbeitsfluid (621) und einem flüssigen Sorptionsmaterial (622), wobei das Arbeitsfluid (621) in dem flüssigen Sorptionsmittel (622) in dem ersten Gefäß (611) adsorbiert ist, um ein Einsatzmaterial aus flüssigem Sorptionsmittel mit einem adsorbiertem Arbeitsfluid (623) zu erhalten,
(b) eine Wärmequelle (613) in Fluidverbindung mit dem Einsatzmaterial aus flüssigem Sorptionsmittel mit dem adsorbiertem Arbeitsfluid (623) und einer Wärmequelle (631), wobei die Wärmequelle (613) das flüssige Sorptionsmittel von dem adsorbiertem Arbeitsfluid löst, um ein Einsatzmaterial aus Arbeitsfluid in einem überkritischen Zustand (625) und ein Einsatzmaterial aus flüssigem Sorptionsmittel (627) zu schaffen,
**dadurch gekennzeichnet, dass** das System ferner
(c) einen ersten Generator (615) in Fluidverbindung mit dem Einsatzmaterial aus Arbeitsfluid in überkritischem Zustand (625), um Energie und ein Einsatzmaterial aus Arbeitsfluid in einem mindestens teilweise kondensierten Zustand (626) in Fluidverbindung mit dem ersten Gefäß (611) zu erhalten, und
(d) einen zweiten Generator (614) in Fluidverbindung mit dem Einsatzmaterial aus flüssigem Sorptionsmittel (627) umfasst, um Energie und ein Einsatzmaterial aus flüssigem Sorptionsmittel (622) in Fluidverbindung mit dem ersten Gefäß (611) zu erhalten.

7. Sorptionssystem (600) nach Anspruch 6, bei dem der zweite Generator (614) ein Doppelschneckenexpander ist.

8. Sorptionssystem (600) nach Anspruch 6 oder 7, bei dem der erste Generator (615) ein Turboexpander ist.

9. Sorptionssystem (400, 500, 600) nach einem der vorhergehenden Ansprüche, bei dem die Wärmequelle (431, 531, 631) eine ungenutzte Wärmequelle ist und vorzugsweise ein Dampferzeuger ist.

10. Adsorptionssystem (500) nach Anspruch 9, bei dem die Wärmequelle ein Dampferzeuger (513) ist und das System ferner einen Kühler (517) in Fluidverbindung mit dem Dampferzeuger umfasst, wobei der Kühler vorzugsweise Kühlwasser enthält.

11. Sorptionssystem (400, 500, 600) nach einem der Ansprüche 9 oder 10, bei dem die Wärmequelle (431, 531, 631) eine Rektifikationskolonne ist.

12. Verfahren zum Erzeugen von Energie und zum Kühlen, bei dem ein Arbeitsfluid (421) auf einem Sorptionsmittel adsorbiert wird,
das Sorptionsmittel erwärmt wird, um das Arbeitsfluid von dem Sorptionsmittel in einem überkritischen Zustand zu desorbieren,
das desorbierte Fluid vorbeigeführt wird, um einen Generator (413) anzutreiben, um Energie zu erzeugen und um das desorbierte Arbeitsfluid mindestens teilweise zu kondensieren, und
das mindestens teilweise kondensierte desorbierte Fluid verdampft wird, um Kühlung und ein Einsatzmaterial aus unkondensiertem Arbeitsfluid (421) zu erhalten.

13. Sorptionssystem (400) nach einem der Ansprüche 1 bis 3 oder des Verfahren nach Anspruch 12, bei dem das Sorptionsmittel ausgewählt ist aus Zeolithen, metallorganischen Gerüsten (MOFs), zeolithischen Imidazolatgerüsten (ZIFs), Silicagel, adsorbierenden Polymeren, Kohle und Aktivkohle und Kombinationen davon, wobei das Sorptionsmittel vorzugsweise ein Zeolith ist.

14. Verfahren zum Erzeugen von Energie und zum Kühlen, bei dem ein Arbeitsfluid (521) in einem flüssigen Sorptionsmittel (522) absorbiert wird, um ein flüssiges Sorptionsmittel und absorbiertes Arbeitsfluid (523) zu erhalten,
das flüssige Sorptionsmittel und absorbiertes Arbeitsfluid unter erhöhten Druck gesetzt werden,
das unter Druck gesetzte flüssige Sorptionsmittel und absorbierte Arbeitsfluid (524) erwärmt werden, um das Arbeitsfluid aus dem Sorptionsmittel in einem überkritischen Zustand zu desorbieren,
das desorbierte Arbeitsfluid vorbeigeführt wird, um einen Generator (514) anzutreiben, um Energie zu erzeugen und um das desorbierte Arbeitsfluid mindestens teilweise zu kondensieren, und
das mindestens teilweise kondensierte desorbierte Arbeitsfluid (526) verdampft wird, um Kühlung und unkondensiertes Arbeitsfluid (521) zu erhalten.

15. Verfahren zum Erzeugen von Energie, bei dem ein Arbeitsfluid (621) in einem flüssigen Sorptionsmittel (622) absorbiert wird, um ein flüssiges Sorptionsmittel und absorbiertes Arbeitsfluid (623) zu erhalten,
das flüssige Sorptionsmittel und absorbiertes Arbeitsfluid unter erhöhten Druck gesetzt werden,
das unter Druck stehende Sorptionsmittel und absorbiertes Arbeitsfluid (624) erwärmt werden, um das Arbeitsfluid aus dem flüssigen Sorptionsmittel in einem überkritischen Zustand zu desorbieren,
das desorbierte Arbeitsfluid vorbeigeführt wird, um einen ersten Generator (617) anzutreiben, um Energie zu erzeugen und um das desorbierte Arbeitsfluid mindestens teilweise zu kondensieren, und
das flüssige Sorptionsmittel (627) vorbeigeführt wird, um einen zweiten Generator (614) anzutreiben, um Energie zu erzeugen.

16. Sorptionssystem (400, 500, 600) nach einem der Ansprüche 1 bis 11 oder 13 oder das Verfahren nach einem der Ansprüche 12 bis 15, bei dem das Arbeitsfluid ausgewählt ist aus Kohlenstoffdioxid, Methan, Ethan, Propan, Butan, Ammoniak und Chlorfluorkohlenwasserstoffen, wobei es vorzugsweise Kohlenstoffdioxid ist.

17. Verfahren nach einem der Ansprüche 12 bis 15, bei dem das Erwärmen durch ungenutzte Wärme aus einem von einem Raffinationsbetrieb und einem chemischen Verarbeitungsbetrieb bewirkt wird, wobei die ungenutzte Wärme eine Temperatur von 232,2 °C (450 °F) oder weniger aufweist.

## Revendications

1. Système de sorption (400) pour produire de l'énergie et une réfrigération, comprenant :
(a) un premier récipient (411) contenant un matériau sorbant en communication fluidique avec un fluide actif (421) et raccordé de manière opérationnelle à une source de chaleur (431) de façon à obtenir une alimentation de fluide actif dans un état supercritique (422) ; et
(b) un évaporateur (414) en communication fluidique avec une alimentation de fluide actif dans au moins un état partiellement condensé (423) de façon à obtenir une réfrigération et une alimentation de fluide actif non condensé (421), **caractérisé en ce que** ce système comprend en outre :
(c) une génératrice (413) en communication fluidique avec l'alimentation de fluide actif dans l'état supercritique (422) de façon à obtenir de l'énergie et l'alimentation de fluide actif dans l'état au moins partiellement condensé (423).

2. Système de sorption (400) selon la revendication 1, comprenant en outre : un deuxième récipient (412) contenant un matériau sorbant en communication fluidique avec le fluide actif (421) et raccordé de manière opérationnelle à une source de chaleur (432) de façon à obtenir une deuxième alimentation de fluide actif dans un état supercritique (422).

3. Système de sorption (400) selon la revendication 2, dans lequel chacun du premier récipient (411) et du deuxième récipient (412) a un mode de sorption et un mode de désorption, dans lequel, dans le mode de désorption, le fluide actif est libéré du matériau sorbant en réponse à la source de chaleur, et dans lequel, dans le mode de sorption, le fluide actif est absorbé et adsorbé par le matériau sorbant, dans lequel, lorsque le premier récipient (411) fonctionne dans le mode d'adsorption, le deuxième récipient (412) fonctionne dans le mode de désorption et dans lequel, lorsque le premier récipient (411) fonctionne dans le mode de désorption, le deuxième récipient (412) fonctionne dans le mode de sorption.

4. Système de sorption (500) pour produire de l'énergie et une réfrigération, comprenant :
(a) un absorbeur (511) pour absorber un fluide actif (521) dans un sorbant liquide (522) ;
(b) une pompe (512) en communication fluidique avec cet absorbeur (511) de façon à obtenir une alimentation de sorbant liquide pressurisé et de fluide actif absorbé (524) ;
(c) une source de chaleur (531) pour chauffer l'alimentation de sorbant liquide pressurisé et de fluide actif absorbé (524) de façon à obtenir une alimentation de fluide actif dans un état supercritique (525) ; et
(d) un évaporateur (515) en communication fluidique avec une alimentation de fluide actif dans au moins un état partiellement condensé (526) de façon à obtenir une réfrigération et du fluide actif non condensé (521) ; **caractérisé en ce que** ce système comprend en outre :
une génératrice (514) en communication fluidique avec l'alimentation de fluide actif dans un état supercritique (525) de façon à obtenir de l'énergie et l'alimentation de fluide actif dans l'état au moins partiellement condensé (526).

5. Système de sorption (500) selon la revendication 4, dans lequel l'évaporateur (515) est en communication fluidique avec l'absorbeur (511).

6. Système de sorption (600) pour produire de l'énergie, comprenant :
(a) un premier récipient (611) en communication fluidique avec un fluide actif (621) et un matériau sorbant liquide (622), le fluide actif (621) étant adsorbé dans le sorbant liquide (622) dans le premier récipient (611) de façon à obtenir une alimentation de sorbant liquide avec un fluide actif adsorbé (623) ;
(b) une source de chaleur (613) en communication fluidique avec l'alimentation de sorbant liquide avec le fluide actif adsorbé (623) et une source de chaleur (631), la source de chaleur (613) dégageant le sorbant liquide du fluide actif adsorbé de façon à créer une alimentation de fluide actif dans un état supercritique (625) et une alimentation de sorbant liquide (627) ; **caractérisé en ce que** ce système comprend en outre :
(c) une première génératrice (615) en communication fluidique avec l'alimentation de fluide actif dans l'état supercritique (625) de façon à obtenir de l'énergie et une alimentation de fluide actif dans un état au moins partiellement condensé (626) en communication fluidique avec le premier récipient (611) ; et
(d) une deuxième génératrice (614) en communication fluidique avec l'alimentation de sorbant liquide (627) de façon à obtenir de l'énergie et une alimentation de sorbant liquide (622) en communication fluidique avec le premier récipient (611).

7. Système de sorption (600) selon la revendication 6, dans lequel la deuxième génératrice (614) est un détendeur à double vis.

8. Système de sorption (600) selon l'une quelconque des revendications 6 ou 7, dans lequel la première génératrice (615) est un turbo-détendeur.

9. Système de sorption (400, 500, 600) selon l'une quelconque des revendications précédentes, dans lequel la source de chaleur (431, 531, 631) est une source de chaleur inutilisée, et est de préférence un générateur de vapeur.

10. Système de sorption (500) selon la revendication 9, dans lequel la source de chaleur est un générateur de vapeur (513) et ce système comprenant en outre un refroidisseur (517) en communication fluidique avec le générateur de vapeur, ce refroidisseur comprenant de préférence de l'eau de refroidissement.

11. Système de sorption (400, 500, 600) selon l'une quelconque des revendications 9 ou 10, dans lequel la source de chaleur (431, 531, 631) est une colonne de rectification.

12. Procédé pour produire de l'énergie et une réfrigération, comprenant :
l'adsorption d'un fluide actif (421) sur un matériau sorbant ;
le chauffage de ce matériau sorbant pour désorber le fluide actif de ce matériau sorbant dans un état supercritique ;
l'acheminement du fluide désorbé pour qu'il entraîne une génératrice (413) pour produire de l'énergie et pour condenser au moins partiellement le fluide actif désorbé ; et
l'évaporation du fluide désorbé au moins partiellement condensé de façon à obtenir une réfrigération et une alimentation de fluide actif non condensé (421).

13. Système de sorption (400) selon l'une quelconque des revendications 1 à 3 ou procédé selon la revendication 12, dans lequel le matériau sorbant est choisi parmi les zéolites, les réseaux de coordination organométallique (MOF), les structures d'imidazolate zéolitique (ZIF), le gel de silice, les polymères d'adsorption, le carbone et le charbon actif, et des combinaisons de ceux-ci, et, de préférence, le matériau sorbant est une zéolite.

14. Procédé pour produire de l'énergie et une réfrigération, comprenant :
l'absorption d'un fluide actif (521) dans un sorbant liquide (522) de façon à obtenir un sorbant liquide et un fluide actif absorbé (523) ;
la pressurisation du sorbant liquide et du fluide actif absorbé jusqu'à une pression augmentée ;
le chauffage du sorbant liquide pressurisé et du fluide actif absorbé (524) de façon à désorber le fluide actif du matériau sorbant dans un état supercritique ;
l'acheminement du fluide désorbé pour qu'il entraîne une génératrice (514) pour produire de l'énergie et pour condenser au moins partiellement le fluide actif désorbé ; et
l'évaporation du fluide actif désorbé au moins partiellement condensé (526) de façon à obtenir une réfrigération et une alimentation de fluide actif non condensé (521).

15. Procédé pour produire de l'énergie, comprenant :
l'absorption d'un fluide actif (621) dans un sorbant liquide (622) de façon à obtenir un sorbant liquide et un fluide actif absorbé (623) ;
la pressurisation du sorbant liquide et du fluide actif absorbé jusqu'à une pression augmentée ;
le chauffage du sorbant liquide pressurisé et du fluide actif absorbé (624) de façon à désorber le fluide actif du sorbant liquide dans un état supercritique ;
l'acheminement du fluide actif désorbé pour qu'il entraîne une première génératrice (617) pour produire de l'énergie et pour condenser au moins partiellement le fluide actif désorbé ; et
l'acheminement du sorbant liquide (627) pour qu'il entraîne une deuxième génératrice (614) pour produire de l'énergie.

16. Système de sorption (400, 500, 600) selon l'une quelconque des revendications 1 à 11 ou 13 ou procédé selon l'une quelconque des revendications 12 à 15, dans lequel le fluide actif est choisi parmi le dioxyde de carbone, le méthane, l'éthane, le propane, le butane, l'ammoniaque et les chlorofluorocarbones, et est de préférence du dioxyde de carbone.

17. Procédé selon l'une quelconque des revendications 12 à 15, dans lequel le chauffage est fourni par de la chaleur inutilisée provenant d'une opération de raffinage et une opération de traitement chimique, ladite chaleur inutilisée étant à une température de 450°F (232,2°C) ou plus basse.
